# FASCICULE DE BREVET EUROPEEN

(11) **EP 0 971 132 B1**
(45) Date de publication et mention de la délivrance du brevet: **28.04.2004**
(21) Numéro de dépôt: 99401599.8
(22) Date de dépôt: 25.06.1999
(51) Int. Cl.: F04D 29/42, B60S 1/48

(54) **Pompe monodirectionnelle à deux sorties pour dispositif de lavage de surfaces d'un véhicule automobile**
Monodirektionale Pumpe mit zwei Ausslässen für die Scheibenreinigungsanlage eines Kraftfahrzeuges
Pump rotating in a single direction and having two outlets for the cleaning of surfaces of a vehicle

(30) Priorité: 08.07.1998 FR 9808757
(43) Date de publication de la demande: 12.01.2000
(73) Titulaire: SOCIETE D'ETUDES ET DE REALISATIONS INDUSTRIELLES ET COMMERCIALES SERIC, 77820 Le Chatelet en Brie (FR)
(72) Inventeur: Lelong, Reynald, 77820 Le Chatelet en Brie (FR)
(74) Mandataire: Derambure, Christian

(56) Documents cités:
- DE-A- 2 748 165
- FR-A- 1 239 757
- FR-A- 2 210 235
- FR-A- 2 703 409

## Description

L'invention se rapporte à une pompe monodirectionnelle à deux sorties.

Elle se rapporte également aux utilisations de cette pompe, en particulier dans un dispositif de lavage de surfaces d'un véhicule automobile comportant une telle pompe.

Les dispositifs de lavage de surfaces montés sur un véhicule automobile comportent généralement une pompe monodirectionnelle à sortie unique, voir DE-A-2 748 165.

Ce type de pompe comprend classiquement un moteur à courant continu destiné à être branché sur la batterie d'un accumulateur, et ayant un arbre de sortie axial pivotant à l'extrémité duquel est monté, calé angulairement, un rotor à ailettes.

Une telle pompe peut être intégrée, par exemple, dans un dispositif lave-vitres pour véhicule automobile comprenant en outre un réservoir de liquide de lavage agencé de manière que le liquide de lavage se trouvant dans le réservoir soit aspiré par la pompe en fonctionnement.

La pompe comporte une sortie, elle-même reliée à un tuyau muni d'un système de dérivation, par exemple un raccord en Té ou en Y, permettant de séparer le liquide de lavage refoulé de la pompe en plusieurs, généralement deux, jets.

Les jets de liquide de lavage sont ensuite dirigés, par l'intermédiaire de tuyaux secondaires, vers des circuits avals tels qu'un ajutage de pulvérisation fixé à la carrosserie ou à l'essuie-glace lui-même.

Il est cependant souhaitable de pouvoir supprimer les raccords en Té ou en Y utilisés pour séparer le liquide de lavage refoulé de la pompe en plusieurs jets.

Ceci pour éviter notamment des phénomènes de perte de charge pouvant apparaître dans l'un des tuyaux secondaires.

Egalement pour éviter des problèmes d'étanchéité au niveau des raccords.

L'invention vise à résoudre ce problème, en proposant une pompe monodirectionnelle à deux sorties, capable de refouler le liquide par les deux sorties simultanément, et avec sensiblement le même débit.

A cet effet, la pompe à deux sorties selon l'invention comprend un corps formant support et protection à l'intérieur duquel est logé un moteur muni d'un arbre de sortie axial pivotant.

A l'extrémité de l'arbre de sortie est monté, calé angulairement, un rotor à ailettes.

Selon l'invention, un carter délimite une chambre hydraulique dans laquelle est logé le rotor, la chambre hydraulique ayant un orifice d'entrée axial communiquant avec l'ouverture d'entrée de la pompe et ayant au moins un orifice de sortie latéral et tangentiel prolongé par au moins un conduit de sortie.

Le conduit de sortie communique avec des moyens de répartition du liquide refoulé par le rotor, les moyens de répartition communiquant par l'intermédiaire de deux ouvertures de sortie avec deux embouts de sortie.

Selon un mode de réalisation, les moyens de répartition du liquide de lavage comprennent une chambre de répartition.

Il est envisageable de ne prévoir qu'un seul orifice de sortie. En variante, la pompe peut comporter deux orifices de sortie prolongés par deux conduits de sortie.

L'invention vise également à protéger les utilisations de la pompe telle qui vient d'être décrit, pour la distribution de liquide, notamment de liquide de lavage, sur des surfaces d'un véhicule automobile, par exemple pour le lavage des vitres et/ou des projecteurs d'un véhicule automobile.

L'invention vise également à protéger un dispositif de lavage de surfaces d'un véhicule automobile.

Un tel dispositif de lavage de surfaces d'un véhicule automobile, par exemple de lavage des vitres et/ou des projecteurs, comprend un réservoir de liquide de lavage, une pompe de distribution du liquide de lavage telle qu'il vient d'être décrit reliée au réservoir de liquide de lavage, deux tuyaux branchés sur les embouts de sortie de la pompe et à la sortie desquels sont montés des ajutages de pulvérisation.

L'invention sera mieux comprise dans la description qui suit, faite en référence aux dessins annexés.

La figure 1 est une représentation schématique, vue de face, d'un mode de réalisation de la pompe selon l'invention.

La figure 2 est une représentation schématique, vue latéralement, de la pompe de la figure 1

La figure 3 est une vue schématique longitudinale en coupe axiale de la pompe de la figure 1.

La figure 4 est une vue en coupe, suivant la ligne AA, de la pompe de la figure 3, vue de dessus.

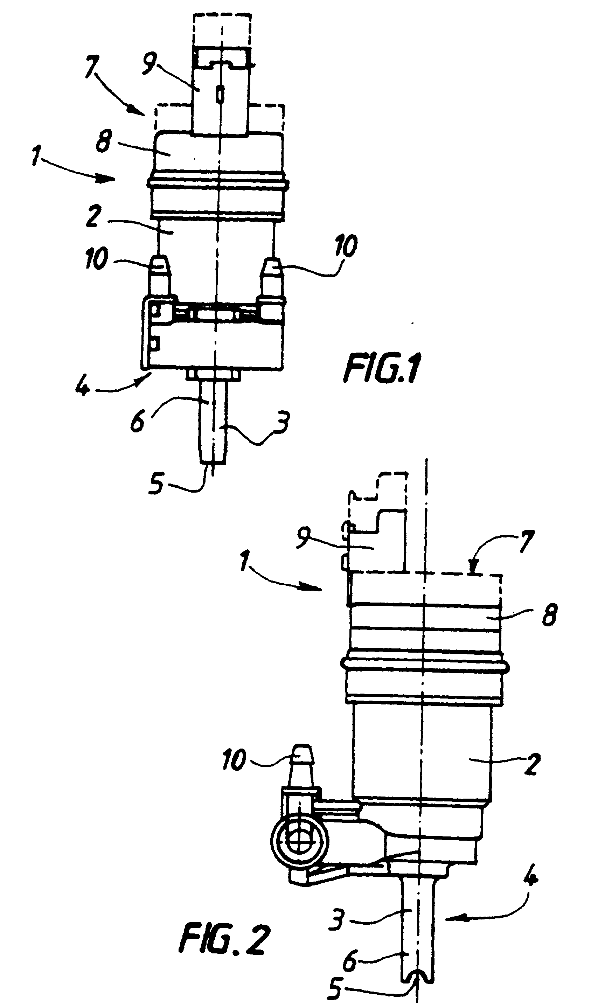

En se référant aux figures 1 et 2, la pompe 1 selon 1 'invention comprend un corps 2 formant support et protection en forme d'enveloppe.

On convient, dans la description, de la définition suivante concernant la géométrie des pièces décrites :

Direction axiale : c'est une direction parallèle à l'axe 3, lequel est l'axe de pivotement du rotor.

La pompe 1 est munie à sa partie terminale inférieure 4 d'une ouverture d'entrée 5 ménagée à la partie terminale d'un conduit 6, permettant l'approvisionnement de la pompe 1 en liquide.

L'ouverture d'entrée 5 est reliée directement ou par l'intermédiaire d'un tuyau à un réservoir (non représenté) contenant le liquide.

La pompe 1 est munie à sa partie terminale supérieure 7 d'un capot protecteur 8.

La pompe 1 comporte un connecteur électrique 9 situé sur le capot protecteur 8 et comprenant des fiches permettant la connexion sur une batterie d'accumulateurs.

La pompe 1 comprend également deux embouts de sortie 10 dont les axes longitudinaux sont sensiblement parallèles à l'axe 3.

Il est cependant envisageable que les axes longitudinaux des embouts de sortie 10 ne soient pas parallèles à l'axe 3, par exemple sensiblement perpendiculaires à l'axe 3 ou dans une position intermédiaire.

Lorsque la pompe 1 est actionnée, le liquide est aspiré par l'ouverture d'entrée 5, puis refoulé, grâce à la pompe 1, vers les embouts de sortie 10 et de là, vers des circuits avals.

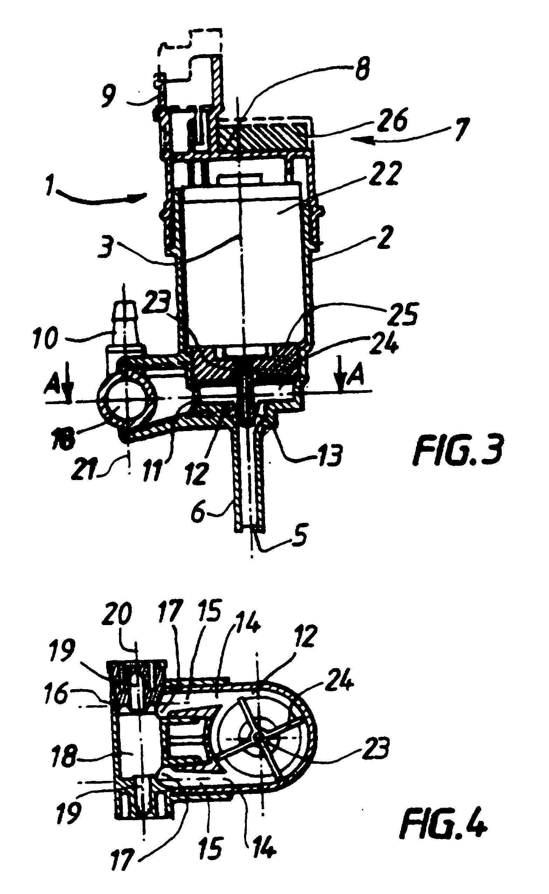

En se référant maintenant aux figures 3 et 4, la pompe 1 comprend un carter 11 en une ou plusieurs parties, de forme plus ou moins complexe, délimitant une chambre hydraulique 12 ayant un orifice d'entrée axial 13.

L'orifice d'entrée 13 communique avec l'ouverture d'entrée 5 de la pompe 1.

Sur la représentation schématique de la figure 3, l'orifice d'entrée 13 est volontairement représenté, par souci de clarté, avec des dimensions supérieures à celles qu'il possède dans la réalité.

La chambre hydraulique 12 possède deux orifices de sortie 14 latéraux et tangentiels prolongés par deux conduits de sortie 15.

Dans la forme de réalisation représentée, les axes longitudinaux 16 des deux conduits de sortie 15 sont sensiblement parallèles entre eux. Il va de soi cependant que d'autres formes de réalisation sont possibles.

De la même façon, la pompe 1 représentée comporte deux orifices de sortie 14 prolongés par deux conduits de sortie 15. Il est toutefois envisageable de ne prévoir qu'un seul orifice de sortie 14 prolongé par un seul conduit de sortie 15.

Les orifices de sortie 14 communiquent avec l'orifice d'entrée 13 de la pompe 1.

Les conduits de sortie 15 débouchent au niveau de leur partie terminale 17 dans des moyens de répartition du liquide refoulé par la pompe 1 comprenant une chambre de répartition 18.

La chambre de répartition 18 est munie de deux ouvertures de sortie 19 en communication avec les embouts de sortie 10.

Dans la forme d'exécution représentée, les deux axes longitudinaux 20 des deux ouvertures de sortie 19 sont sensiblement confondus entre eux et sensiblement perpendiculaires aux axes longitudinaux 21 des embouts de sortie 10.

Selon une forme de réalisation, la chambre de répartition 18 occupe un volume de l'ordre de 1 à 3 cm³.

Par exemple, la chambre peut posséder un diamètre de 10 mm et une longueur de 16,5 mm.

La section transversale des conduits de sortie 15 est choisie de façon à être sensiblement égale ou supérieure à la section transversale des ouvertures de sortie 19. Cette différence de section n'est cependant pas critique en elle-même.

Par exemple, la section transversale des conduits de sortie 15 est de l'ordre de 10 mm², et la section transversale des orifices de sortie 19 est de l'ordre de 9 mm².

Un moteur 22 est logé dans le corps 2 et est muni d'un arbre de sortie 23 axial pivotant. Sur la partie extrême de l'arbre 23 située dans la chambre 12 est monté, calé angulairement, un rotor à ailettes 24.

Le rotor 24 est logé dans la chambre hydraulique 12 avec un jeu nécessaire à son pivotement autour de l'axe 3, l'ajustement entre-eux étant tel que le pivotement du rotor à ailettes 24 provoque la circulation circonférentielle du liquide dans la chambre hydraulique 12, de l'orifice d'entrée 13 aux orifices de sortie 14.

La chambre hydraulique 12 est fermée par un joint axial 25, disposé dans le corps 2 entre le moteur 22 et le rotor 24, le joint 25 étant traversé de façon suffisamment étanche au liquide par l'arbre de sortie 23 du moteur 22.

Lorsque la pompe 1 est activée, le liquide est aspiré par l'ouverture d'entrée 5, remonte dans le conduit 6, puis arrive par l'orifice d'entrée 13 dans la chambre hydraulique 12.

La rotation des ailettes du rotor 24 provoque le refoulement du liquide par les deux orifices de sortie 14 et, de là, par les deux conduits de sortie 15.

Le liquide arrive alors dans la chambre de répartition 18 qu'il remplit au moins partiellement et est expulsé simultanément par les deux ouvertures de sortie 19 et les deux embouts de sortie 10, avec une différence de débit acceptable entre les deux embouts de sortie 10, aux pressions utilisées conventionnellement.

Selon une forme de réalisation, la pompe 1 de l'invention fonctionne à des pressions relativement basses, de l'ordre de 1.10⁵ à 3.10⁵ Pascals.

Il peut être prévu de disposer dans le capot protecteur 8 un dispositif anti-parasitaire 26, améliorant le fonctionnement de la pompe 1 lorsqu'elle est utilisée dans un véhicule automobile.

Selon une forme d'exécution, le corps 2 de la pompe 1 est monobloc, alternativement il peut être constitué en plusieurs parties, assemblées en elles par exemple par encliquetage.

Il peut être également prévu de munir la pompe 1 de dispositifs d'isolation phonique (non représentés).

La pompe 1 de l'invention peut être réalisée en différents matériaux. Par exemple, le corps 2, les embouts de sortie 10, le capot protecteur 8 sont réalisés à partir de matière plastique telle que polypropylène, polyamide.

Le joint 25 peut être réalisé à partir de caoutchouc EPDM (éthylène-propylène-diène-monomère).

La pompe 1 tel qu'il vient d'être décrit trouve une application dans les dispositifs de lavage de surfaces, telles que les vitres et/ou les projecteurs de véhicule automobile.

Il va cependant de soi que d'autres utilisations en dehors de l'automobile peuvent être imaginées, dès lors qu'il s'agit de distribuer un liquide aspiré à partir d'un réservoir et refoulé grâce à une pompe, par deux sorties et de façon simultanée.

## Revendications

1. Pompe (1) monodirectionnelle à deux sorties comprenant un corps (2) formant support et protection ; un moteur (22) logé dans le corps (2) et muni d'un arbre de sortie axial (23) pivotant à l'extrémité duquel est monté, calé angulairement, un rotor à ailettes (24) ; un carter (11) délimitant une chambre hydraulique (12) dans laquelle est logé le rotor (24), la chambre hydraulique (12) ayant un orifice d'entrée axial (13) communiquant avec l'ouverture d'entrée (5) de la pompe (1) et ayant au moins un orifice de sortie (14) latéral et tangentiel prolongé par au moins un conduit de sortie (15), **caractérisé en ce que** le conduit de sortie (15) communique avec des moyens de répartition du liquide refoulé par le rotor (24), les moyens de répartition communiquant par l'intermédiaire de deux ouvertures de sortie (19) avec deux embouts de sortie (10).

2. Pompe (1) selon la revendication 1, **caractérisée en ce que** les moyens de répartition du liquide comprennent une chambre de répartition (18).

3. Pompe (1) selon la revendication 1 ou 2, **caractérisée en ce qu'**elle comporte deux orifices de sortie (14) prolongés par deux conduits de sortie (15).

4. Pompe (1) selon l'une quelconque des revendications 1 à 3, **caractérisée en ce que** la section transversale des conduits de sortie (15) est sensiblement égale ou supérieure à la section transversale des ouvertures de sortie (19).

5. Pompe (1) selon l'une quelconque des revendications 1 à 4, **caractérisée en ce que** les axes longitudinaux (21) des deux embouts de sortie (10) sont sensiblement parallèles à l'axe (3) de pivotement du rotor (24).

6. Pompe (1) selon l'une quelconque des revendications 1 à 5, **caractérisée en ce que** les axes longitudinaux (16) des deux conduits de sortie (15) sont sensiblement parallèles entre eux.

7. Pompe (1) selon l'une quelconque des revendications 1 à 6, **caractérisée en ce que** les axes longitudinaux (20) des deux ouvertures de sortie (19) sont sensiblement confondus entre eux et sensiblement perpendiculaires aux axes longitudinaux (21) des embouts de sortie (10).

8. Pompe (1) selon l'une quelconque des revendications 1 à 7, **caractérisée en ce que** la chambre de répartition (18) occupe un volume de l'ordre de 1 à 3 cm³.

9. Pompe (1) selon l'une quelconque des revendications 1 à 8, **caractérisée en ce qu'**elle fonctionne à des pressions relativement basses, de l'ordre de 1.10⁵ à 3.10⁵ Pascals.

10. Pompe (1) selon l'une quelconque des revendications 1 à 9, **caractérisée en ce que** la chambre hydraulique (12) est fermée par un joint axial (25), disposé dans le corps (2) entre le moteur (22) et le rotor (24), le joint (25) étant traversé de façon suffisamment étanche au liquide par l'arbre de sortie (23) du moteur (22).

11. Pompe (1) selon l'une quelconque des revendications 1 à 10, **caractérisée en ce que** le corps (2) est monobloc.

12. Pompe (1) selon l'une quelconque des revendications 1 à 11, **caractérisée en ce que** le corps (2) est réalisé en plusieurs parties.

13. Utilisation d'une pompe (1) selon l'une quelconque des revendications 1 à 12, pour la distribution de liquide, notamment de liquide de lavage, sur des surfaces d'un véhicule automobile.

14. Utilisation selon la revendication 13, pour le lavage des vitres et/ou des projecteurs d'un véhicule automobile.

15. Dispositif de lavage de surfaces d'un véhicule automobile, par exemple de lavage des vitres et/ou des projecteurs, comprenant un réservoir de liquide de lavage, une pompe de distribution du liquide de lavage selon l'une quelconque des revendications 1 à 12 reliée au réservoir de liquide de lavage, deux tuyaux branchés sur les embouts de sortie de la pompe et à la sortie desquels sont montés des ajutages de pulvérisation.

## Patentansprüche

1. In eine Richtung gerichtete Pumpe (1) mit zwei Ausgängen mit einem einen Träger und Schutz bildenden Körper (2); einem im Körper (2) untergebrachten Motor (22) und einer am Ende schwenkenden axialen Ausgangswelle (23), an welchem winkelförmig verkeilt ein Flügelrotor (24) angebracht ist; einem eine hydraulische Kammer (12) begrenzenden Gehäuse (11), in der der Rotor (24) untergebracht ist, wobei die hydraulische Kammer (12) eine mit der Eingangsöffnung (5) der Pumpe (1) kommunizierende axiale Eingangsöffnung (13) und wenigstens eine von wenigstens einem Ausgangskanal (15) verlängerte laterale und tangentiale Ausgangsöffnung (14) hat, **dadurch gekennzeichnet**, das der Ausgangskanal (15) mit den Verteilermitteln der vom Rotor (24) gestauten Flüssigkeit kommuniziert, wobei die Verteilermittel über zwei Ausgangsöffnungen (19) mit zwei Ausgangsenden (10) kommunizieren.

2. Pumpe (1) gemäß Anspruch 1, **dadurch gekennzeichnet, dass** die Verteilermittel der Flüssigkeit eine Verteilerkammer (18) umfassen.

3. Pumpe (1) gemäß Anspruch 1 oder 2, **dadurch gekennzeichnet, dass** sie zwei von zwei Ausgangskanälen (15) verlängerte Ausgangsöffnungen (14) umfasst.

4. Pumpe (1) gemäß Anspruch 1 bis 3, **dadurch gekennzeichnet, dass** der Querschnitt der Ausgangskanäle (15) deutlich gleich groß wie oder größer ist als der Querschnitt der Ausgangsöffnungen (19) ist.

5. Pumpe (1) gemäß Anspruch 1 bis 4, **dadurch gekennzeichnet, dass** die Längsachsen (21) der zwei Ausgangsenden (10) deutlich parallel zur Schwenkachse (3) des Rotors (24) sind.

6. Pumpe (1) gemäß Anspruch 1 bis 5, **dadurch gekennzeichnet, dass** die Längsachsen (16) der beiden Ausgangskanäle (15) untereinander deutlich parallel sind.

7. Pumpe (1) gemäß Anspruch 1 bis 6, **dadurch gekennzeichnet, dass** die Längsachsen (20) der zwei Ausgangsöffnungen (19) deutlich untereinander zusammenfallen und zu den Längsachsen (21) der Ausgangsenden (10) deutlich senkrecht sind.

8. Pumpe (1) gemäß Anspruch 1 bis 7, **dadurch gekennzeichnet, dass** die Verteilerkammer (18) ein Volumen in der Größenordnung von 1 bis 3 cm³ einnimmt.

9. Pumpe (1) gemäß Anspruch 1 bis 8, **dadurch gekennzeichnet, dass** sie bei relativ niedrigen Drücken in der Größenordnung von 1,10⁵ bis 3,10⁵ Pascal arbeitet.

10. Pumpe (1) gemäß Anspruch 1 bis 9, **dadurch gekennzeichnet**, das die hydraulische Kammer (12) durch eine im Körper (2) zwischen dem Motor (22) und dem Rotor (24) angeordnete axiale Dichtung (25) geschlossen ist, wobei die Dichtung (25) durch die Ausgangswelle (23) des Motors (22) gegen Flüssigkeiten ausreichend abgedichtet durchquert wird.

11. Pumpe (1) gemäß Anspruch 1 bis 10, **dadurch gekennzeichnet, dass** der Körper (2) aus einem einzigen Block besteht.

12. Pumpe (1) gemäß Anspruch 1 bis 11, **dadurch gekennzeichnet, dass** der Körper (2) aus mehreren Teilen realisiert ist.

13. Einsatz einer Pumpe (1) gemäß Anspruch 1 bis 12 für das Verteilen von Flüssigkeit, insbesondere von Waschflüssigkeit, auf den Flächen eines Kraftfahrzeugs.

14. Einsatz gemäß Anspruch 13 für das Waschen von Windschutzscheiben und / oder Scheinwerfern eines Kraftfahrzeugs.

15. Waschvorrichtung für Flächen eines Kraftfahrzeuges, zum Beispiel zum Waschen von Windschutzscheiben und / oder Scheinwerfern, mit einem Behälter für Waschflüssigkeit, einer an den Behälter für Waschflüssigkeit angeschlossenen Verteilerpumpe der Waschflüssigkeit gemäß Anspruch 1 bis 12, zwei an den Ausgangsenden der Pumpe angeschlossenen Rohre und an deren Ausgang Sprühdüsen angebracht sind.

## Claims

1. A monodirectional pump (1) with two outlets, comprising a body (2) forming a support and protection; a motor (22) housed in the body (2) and provided with a pivoting axial output shaft (23) at the end of which a rotor with blades (24) is mounted, fixed angularly; a casing (11) delimiting a hydraulic chamber (12) in which the rotor (24) is housed, the hydraulic chamber (12) having an axial inlet orifice (13) communicating with the inlet opening (5) of the pump (1) and having at least one lateral and tangential outlet orifice (14) extended by at least one outlet conduit (15), **characterised in that** the outlet conduit (15) communicates with means of distributing the liquid delivered by the rotor (24), the distribution means communicating by means of two outlet openings (19) with two outlet connecting pieces (10).

2. A pump (1) according to Claim 1, **characterised in that** the means of distributing the liquid comprise a distribution chamber (18).

3. A pump (1) according to Claim 1 or 2, **characterised in that** it comprises two outlet orifices (14) extended by two outlet conduits (15).

4. A pump (1) according to any one of Claims 1 to 3, **characterised in that** the transverse section of the outlet conduits (15) is substantially equal to or greater than the transverse section of the outlet openings (19).

5. A pump (1) according to any one of Claims 1 to 4, **characterised in that** the longitudinal axes (21) of the two outlet connecting pieces (10) are substantially parallel to the pivot axis (3) of the rotor (24).

6. A pump (1) according to any one of Claims 1 to 5. **characterised in that** the longitudinal axes (16) of the two outlet conduits (15) are substantially parallel to each other.

7. A pump (1) according to any one of Claims 1 to 6, **characterised in that** the longitudinal axes (20) of the two outlet openings (19) are substantially merged with each other and substantially perpendicular to the longitudinal axes (21) of the outlet connecting pieces (10).

8. A pump (1) according to any one of Claims 1 to 7, **characterised in that** the distribution chamber (18) occupies a volume of around 1 to 3 cm³.

9. A pump (1) according to any one of Claims 1 to 8, **characterised in that** it functions at relatively low pressures, around 1.10⁵ to 3.10⁵ Pascals.

10. A pump (1) according to any one of Claims 1 to 9, **characterised in that** the hydraulic chamber (12) is closed by an axial seal (25), disposed in the body (2) between the motor (22) and the rotor (24), the seal (25) having the output shaft (23) of the motor (22) passing through it in a sufficiently liquidtight manner.

11. A pump (1) according to any one of Claims 1 to 10, **characterised in that** the body (2) is in a single piece.

12. A pump (1) according to any one of Claims 1 to 11, **characterised in that** the body (2) is produced in several parts.

13. Use of a pump (1) according to any one of Claims 1 to 12, for the distribution of liquid, in particular washing liquid, onto the surfaces of a motor vehicle.

14. Use according to Claim 13, for washing windows and/or headlights of a motor vehicle.

15. Device for washing surfaces of a motor vehicle, for example for washing windows and/or headlights, comprising a reservoir of washing liquid, a pump for distributing the washing liquid according to any one of Claims 1 to 12 connected to the reservoir of washing liquid, and two pipes connected to the outlet connecting pieces of the pump and at the outlet of which spray nozzles are mounted.
